# EUROPEAN PATENT APPLICATION

(11) **EP 1 700 635 A1**
(43) Date of publication of application: **13.09.2006**
(21) Application number: 05005247.1
(22) Date of filing: 10.03.2005
(51) Int. Cl.: B01J 29/40, B01J 27/16, B01J 37/00

(54) **Catalyst composition**

(71) Applicant: ExxonMobil Chemical Patents, Inc., Baytown, TX 77520-5200 (US)
(72) Inventor: Kraushaar-Czarnetzki, Bettina, 76229 Karlsruhe (DE); Patcas, Florina-Corina, 76131 Karlsruhe (DE)
(74) Representative: Mareschal, Anne

(57) **Abstract**

A zeolite composition with an aluminum phosphate binder catalyses an oxygenate-containing feedstock conversion to hydrocarbon with reduced saturates yield.

## Description

This invention relates to a molecular sieve catalyst composition, a method of making the composition, and to a process using the catalyst composition.

The conversion of oxygenates to hydrocarbons, especially olefins, is an important process for the petrochemical industry. The oxygenates, of which methanol and dimethyl ether are common examples, may themselves be obtained from a variety of sources by a variety of reactions. Such a source, for example natural gas, petroleum liquids, coal, recycled plastics, may be converted to synthesis gas which in turn is converted to methanol, the preferred oxygenate for light olefin manufacture. Light olefins, especially ethylene and propylene, are important commodity petrochemicals for the manufacture of plastics, plasticizers, lubricants, and other commercially important materials. Since light olefins are of high commercial value, it is desirable in such a conversion to maximize olefin yield relative to, for example, paraffins.

Conversion of oxygenates to hydrocarbons, especially methanol to olefins, is usually carried out in the presence of a molecular sieve catalyst.

Molecular sieves, especially crystalline molecular sieves, both natural and synthetic, of many types, are known *per se* and as catalysts for conversion of one type of organic material to another or others. Examples of molecular sieve materials, referred to herein as zeolites, usually based on an aluminosilicate framework, suitable for catalysing oxygenate to hydrocarbon conversions (hereinafter occasionally referred to for simplicity as methanol to hydrocarbon, especially to olefin, or for brevity as MTH or MTO, conversions) include more especially those of structure types MFI, CHA, and AEI.

Molecular sieve catalysts are typically formed into compositions comprising the molecular sieve and a binder, which has various beneficial results. Some molecular sieves are more active as catalysts than may be required, and varying their proportions in a catalyst composition enables their activity to be controlled. A binder may be, but does not necessarily have to be, itself a catalyst, active either in the reaction, e.g., the MTO conversion, that the molecular sieve is to catalyse, or in some other reaction that precedes or succeeds the MTO reaction, facilitating the overall reaction in some way. The binder also provides a mechanical function to limit the breakdown of the catalyst particles during the course of a reaction. For example, in a fluidized bed reactor, the collisions between catalyst composition particles themselves and with the reactor walls cause attritive breakdown of the composition, the resulting fines leaving the reactor and causing problems downstream. The binder may also control the access of reactants to, or the escape of reaction products from, the catalyst by the size of its pores, the size of the binder particles, or otherwise.

Typical binders include various types of hydrated alumina, silica, and/or other inorganic oxides, and clays of various types.

It has now unexpectedly been found that catalyst compositions in which aluminum phosphate is used as a binder have advantages in MTO conversions over compositions employing conventional binders, for example in olefinic hydrocarbon yield relative to saturated hydrocarbon yield.

In a first aspect, therefore, the present invention provides a process for the conversion of a feedstock to a hydrocarbon-containing product, which comprises contacting the feedstock under hydrocarbon-producing conditions with a catalyst composition comprising a crystalline molecular sieve and an aluminum phosphate-containing binder.

The invention also provides the use, in a process for the conversion of a feedstock to a hydrocarbon-containing product, of a catalyst composition comprising a crystalline molecular sieve and an aluminum phosphate-containing binder to enhance the olefinic hydrocarbon:saturated hydrocarbon ratio of the product.

It has also been found that a catalyst composition in which the aluminum phosphate binder has the structure type of tridymite is especially effective.

The invention accordingly also provides in a second aspect a catalyst composition comprising a crystalline molecular sieve and an aluminum phosphate-containing binder in which the aluminum phosphate is at least partially in a form that has the structure type of tridymite. This aspect of the invention also provides a process for converting a feedstock to a hydrocarbon-containing product using the catalyst composition, and the use of the catalyst composition to enhance the olefinic hydrocarbon:saturated hydrocarbon yield ratio.

It has further been found that forming a catalyst composition using an amorphous aluminum phosphate as binder precursor and calcining results in a strong material nevertheless possessing a highly porous structure.

Accordingly, the invention further provides, in a third aspect, a process for the manufacture of a catalyst composition, which comprises blending an amorphous solid aluminum phosphate with a crystalline molecular sieve and calcining the resulting blend, the calcination advantageously converting the aluminum phosphate at least partially to a form that has the structure type of tridymite. The aluminum phosphate used as starting material in forming the catalyst is advantageously approximately neutral, i.e., the Al:P molar ratio is advantageously in the range 1.5:1 to 1:1.5, especially when the starting material is amorphous.

Examination of the porosity of catalyst compositions using porosimetry reveals pores characterized as macropores, mesopores, and micropores. Different workers place different values on the pore size boundaries between mesopores and macropores. In this specification, micropores are those of diameter less than 2nm (the limit of penetration when using mercury porosimety), mesopores are those of diameter between 2 and 20nm, and macropores are those of diameter greater than 20nm. The reader is referred to "Analytical Methods in Fine Particle Technology", P.A. Webb, C. Orr, Micromeretics Instrument Corporation, 1997, ISBN 0-9656783-0-X, incorporated by reference, for details of mercury porosimetry.

Since pore size is measured by mercury porosimetry, references to pore sizes and percentages of pore volume represented by pores of a given size or in a given size range are to measurements carried out in that way, and do not take into account the micropores that are present in the molecular sieve particles themselves. Further micropore analysis can be done using nitrogen physisorption.

It has been found that the pore volume and pore size may be varied by varying the proportion of crystalline molecular sieve and its crystal size. For formulations using zeolite particles (agglomerates or single crystals) of approximately 500 nm diameter the monomodally distributed pore size varies between 100-200 nm if the zeolite content of the formulation is varied between 10-75%. For such particles, pore volume as a function of zeolite content initially increases with increasing zeolite content, reaches a maximum at approximately 40% zeolite content and then decreases with further increasing zeolite content. The pore volume varies between 0.2cm³/g and 0.8cm³/g.
There are indications that for high zeolite content (75%), the median pore diameter strongly depends on the size of the interspersed zeolite particles with a relationship of approximately: pore size = 0.25*D_{particle} where D_{particle} is the mean particle diameter (d50 as determined by MALVERN LDA - Laser Doppler Anemometry). With low zeolite content the correlation does not obey the above relationship, but the pore size still increases with increasing particle size.

An example of a presently preferred composition is one containing about 70% by weight aluminum phosphate and 30% by weight zeolite, having a monomodal pore size distribution with a maximum at about 200nm, as measured by mercury porosimetry.

As molecular sieve there may be mentioned, using the terminology of the Atlas of Zeolite Framework Types, 5th Edition, Elsevier, 2001, the small pore molecular sieves of structure types AEI, AFT, APC, ATN, ATT, ATV, AWW, BIK, CAS, CHA, CHI, DAC, DDR, EDI, ERI, GOO, KFI, LEV, LOV, LTA, MON, PAU, PHI, RHO, ROG, THO, and substituted forms thereof; the medium pore molecular sieves of types AEL, AFO, EUO, FER, HEU, MEL, MFI, MTW, MTT, TON, and substituted forms thereof; and the large pore molecular sieves of types AFI, EMT, FAU, and substituted forms thereof. Other molecular sieves are of types ANA, BEA, CFI, CLO, DON, GIS, LTL, MER, MOR, MWW and SOD. Examples of the preferred molecular sieves, particularly for converting an oxygenate-containing feedstock into hydrocarbons, especially olefins, are of types AEL, AFI, BEA, CHA, ERI, FAU, FER, GIS, LTA, LTL, MER, MFI, MOR, MTT, MWW, TAM and TON. Materials of high silica/alumina ratio, e.g., greater than 30, preferably greater than 50, are preferred.

An especially preferred medium pore aluminosilicate or zeolite molecular sieve is one of the MFI structure type, ZSM-5.

Especially preferred small pore zeolites are of the CHA and AEI structure types, and intergrowths of CHA structure types with others, e.g., CHA/AEI intergrowths.

The synthesis of molecular sieves for use in the invention is carried out by methods known *per se* or described in the literature. Generally, synthesis is carried out by hydrothermal crystallization of appropriate sources of the essential framework elements of the molecular sieve, e.g., of aluminum and silicon, as the case may require, if desired or required a template (structure directing agent), and if desired or required a source of non-framework elements.

As an example, the synthesis mixture may be placed in a sealed pressure vessel, optionally lined with an inert plastic such as polytetrafluoroethylene, and heated, under crystallization pressure and temperature, until a crystalline material is formed, and then recovered by filtration, centrifugation and/or decanting.

The molecular sieves, especially the aluminosilicates, are normally used in MTH conversion in their acid form, and if necessary are converted to their acid form either before or after formulation, a procedure carried out in art-recognized ways. For example, treatment with an acid, e.g., HCl, may be employed, or ion-exchange with an ammonium salt, e.g., NH₄NO₃, followed by calcination.

Although in principle mixing with the binder and ion exchange may be carried out in any order, advantageously ion exchange is effected after formulation and preferably after shaping. If ion-exchange is carried out after combination with the aluminum phosphate binder or precursor, it may be necessary to intensify, e.g., by repetition, the ion-exchange procedure.

The catalyst composition may be prepared, as indicated above, by any of the methods described in the art. Advantageously, however, the catalyst particles are combined with the binder material initially by dry-mixing, then in a liquid, preferably water, preferably with a plasticizer, to yield a paste. As plasticizer, there may be mentioned one that will be decomposed during any subsequent heat treatment, e.g., calcination. Suitable materials for this purpose include, for example, alkylated cellulose derivatives, hydroxyethylcellulose (HEC), ammonium alginate, polyvinyl pyrrolidone, and polyethylene glycol.

The uniformly mixed paste may subsequently be shaped, for example by spray drying to yield microspheres, pelletizing or, preferably, by extrusion.

The paste is then extruded, for example in a piston extruder, into strings, for example cylindrical, dried, again calcined, and chopped into pieces of a desired length.

Advantageously, the formulated molecular sieve catalyst composition contains from 1% to 99%, preferably from 10% to 90%, more preferably from 10% to 80%, even more preferably from 20% to 70%, and most preferably from 25% to 60%, by weight of the molecular sieve based on the total weight of the molecular sieve catalyst composition.

Once the molecular sieve catalyst composition is shaped, and in a substantially dry or dried state, a heat treatment, for example calcination, is advantageously performed to harden and/or activate the composition. During this heat treatment, three types of events occur: a crystal phase transition into tridymite, which requires a temperature of at least 450°C; burn out of all organic compounds (f.ex. template used during zeolite synthesis if still present, organic plasticizer, if used); evolution of carbon-containing gas and water. Preferably, the crystal phase transition to the structure type of tridymite has to occur. Therefore the heat treatment is preferably carried out at a temperature of at least 450°C. Also, if the temperature is higher than 800°C, the crystal structure of the binder may change to other structure types. Therefore, the heat treatment is advantageously carried out at a temperature that is no greater than 800°C. Typical temperatures are in the range from 450°C to 800°C, preferably from 500°C to 700°C, and most preferably from 550°C to 650°C, typically for from 15 minutes to 20 hours. Calcination may be carried out in, for example, a rotary calciner, fluid bed calciner, or a batch oven.

In a preferred procedure for manufacture of the catalyst composition of the invention, an as-synthesized zeolite is converted to the H-form by calcination and ion-exchange. The conversion to the H-form may be carried out before or preferably after formulation and shaping. If carried out before formulation, calcination may take place, for example, at a temperature within the range of 400°C to 1000°C, advantageously from 500°C to 700°C, for from 15 minutes to 20 hours. If carried out after formulation, calcination advantageously takes place at a temperature no greater than 800°C. The material is then allowed to cool. The cooled material is then subjected to ion-exchange with an ammonium salt solution, dried, and again calcined. Several ion exchange/calcination cycles may be carried out.

The compositions of the invention are useful in a variety of processes especially the conversion of a feedstock comprising one or more oxygenates to one or more hydrocarbons, especially olefins.

Preferred oxygenate feedstocks contain one or more alcohol(s), preferably aliphatic alcohol(s) having from 1 to 20 carbon atoms, preferably from 1 to 10 carbon atoms, and more preferably from 1 to 4 carbon atoms. The alcohols may be straight or branched chain alkanols or their unsaturated counterparts.

Examples of oxygenates are methanol, ethanol, n-propanol, isopropanol, methyl ethyl ether, dimethyl ether, diethyl ether, di-isopropyl ether, formaldehyde, dimethyl carbonate, dimethyl ketone, acetic acid, and mixtures thereof.
Preferably the feedstock is one or more of methanol, ethanol, dimethyl ether, and diethyl ether, more preferably methanol and dimethyl ether, and most preferably methanol.

The various feedstocks discussed above, particularly a feedstock containing an oxygenate, more particularly a feedstock containing an alcohol, are converted primarily into one or more olefin(s). The olefin(s) or olefin monomer(s) produced from the feedstock typically have from 2 to 30 carbon atoms, preferably 2 to 8 carbon atoms, more preferably 2 to 6 carbon atoms, still more preferably 2 to 4 carbon atoms, and most preferably ethylene and/or propylene. Other examples of olefin monomer(s) are butene-1, pentene-1, 4-methyl-pentene-1, hexene-1, octene-1 and decene-1 and their internally unsaturated isomers as well as the skeletal isomers of those mentioned. Other olefinic monomer(s) include unsaturated monomers, diolefins having 4 to 18 carbon atoms, conjugated or nonconjugated dienes, polyenes, vinyl monomers and cyclic olefins.

In the most preferred embodiment, the feedstock, preferably of one or more oxygenates, is converted in the presence of a composition of the invention into olefin(s) having 2 to 6 carbon atoms, preferably 2 to 4 carbon atoms. Most preferably, olefin(s), alone or combination, are converted from a feedstock containing an oxygenate, preferably an alcohol, most preferably methanol, to the preferred olefin(s) ethylene and/or propylene.

There are many processes used to convert feedstock into hydrocarbons, especially olefins, including various cracking processes such as steam cracking, thermal regenerative cracking, fluidized bed cracking, fluid catalytic cracking, deep catalytic cracking, and visbreaking. The most preferred process is generally referred to as gas-to-olefins (GTO) or alternatively, methanol-to-olefins (MTO). In a GTO process, typically natural gas is converted into a synthesis gas that is converted into an oxygenated feedstock, preferably containing methanol, the oxygenated feedstock being converted in the presence of a molecular sieve catalyst composition into one or more olefin(s), preferably ethylene and/or propylene. In an MTO process, typically an oxygenated feedstock, most preferably a methanol and/or dimethyl ether-containing feedstock, is converted in the presence of a molecular sieve catalyst composition of the invention into one or more olefin(s), preferably and predominantly ethylene and/or propylene, often referred to as light olefin(s). Another process of interest for the present invention is the conversion of oxygenates to alkylamines, especially the conversion of methanol and/or dimethyl ether to methylamines.

The feedstock may contain one or more diluent(s), for example, helium, argon, nitrogen, carbon monoxide, carbon dioxide, water, essentially non-reactive paraffins (especially alkanes such as methane, ethane, and propane), essentially non-reactive aromatic compounds, and mixtures thereof. The most preferred diluents are water and nitrogen, with water being particularly preferred.

The proportion of diluent in the feedstock may be in the range of from 1 to 99 mole percent, preferably from 1 to 80 mole percent, more preferably from 5 to 50, and most preferably from 5 to 25, based on the total number of moles of from 1 to 99 mole percent.

The process may be carried out in a fixed bed, a fluidized bed (including a turbulent bed), a continuous fluidized bed, a continuous catalyst regeneration, or a continuous high velocity fluidized bed, reactor.

The process may be carried out at a temperature in the range of from 200°C to 1000°C, advantageously from 250°C to 800°C, preferably from 250°C to 750°C, more preferably from 300°C to 650°C, and most preferably from 300°C to 450°C.

The process may be carried out at a pressure, based on the partial pressure of the feedstock exclusive of any diluent, in the range of from 0.1 kPaa to 5 MPaa, advantageously from 5 kPaa to 1 MPaa, and most preferably from 20 kPaa to 500 kPaa.

The process may be carried out at a weight hourly space velocity (WHSV), defined as the total weight of the feedstock excluding any diluent per hour per weight of molecular sieve in the molecular sieve catalyst composition in the reaction zone, when a fluidized bed is used, within the range from 1 hr⁻¹ to 5000 hr⁻¹, preferably from 2 hr⁻¹ to 3000 hr⁻¹, more preferably from 5 hr⁻¹ to 1500 hr⁻¹, and most preferably from 10 hr⁻¹ to 1000 hr⁻¹. Preferably, the WHSV is greater than 20 hr⁻¹, and for conversion of a feedstock containing methanol and dimethyl ether is advantageously in the range of from 20 hr⁻¹ to 300 hr⁻¹. The gas velocity is desirably maintained at a level sufficient to keep the catalyst composition in a fluidized state within the reactor. In a fixed bed reactor a lower WHSV is generally used, for example from 0.01 to 100, advantageously 0.05 to 50, preferably 0.1 to 25, hr⁻¹.

Olefins produced by the process of the invention may be used for the manufacture of aldehydes, alcohols, acids and esters, especially vinyl acetate, higher linear alpha olefins, ethylene dichloride, vinyl chloride, ethylbenzene, ethylene oxide, cumene, isopropyl alcohol, acrolein, allyl chloride, propylene oxide, acrylic acid, ethylene-propylene rubbers, and acrylonitrile. They may also be polymerized to polyolefins and other polymers.

### Examples

The following examples illustrate the invention. All parts and percentages are by weight unless stated otherwise. In the accompanying drawings:
Fig. 1 is an x-ray diffractogram (XRD) showing the spectra of the calcined product of Example 1 (bottom diffractogram) and of calcined aluminum phosphate (top diffractogram), and
Fig. 2 is a scanning electron micrograph (SEM) of a cut through a calcined extrudate of Example 1.

### Example 1

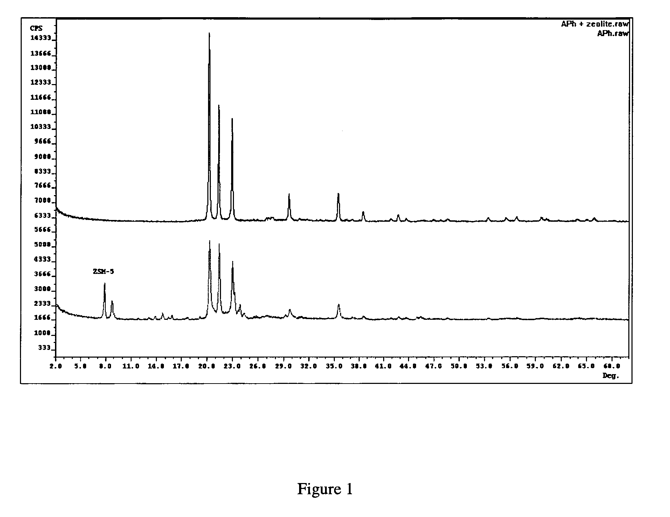

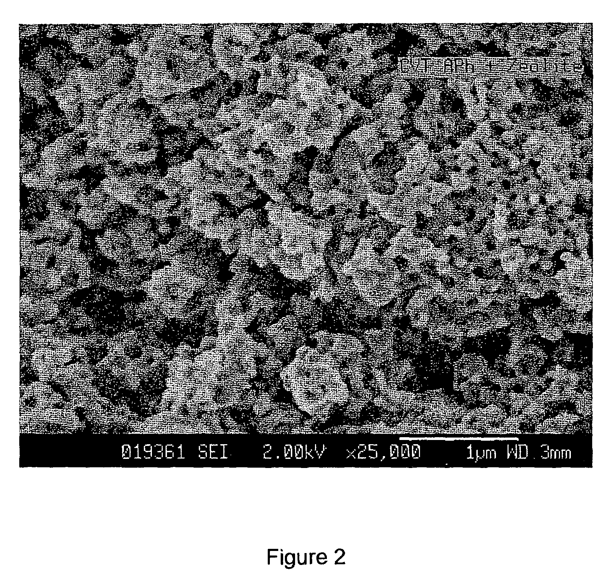

12 parts ZSM-5 (silica alumina ratio 32:1, containing template to reduce agglomeration during calcination) of crystal size about 500nm (agglomerates of 20-50 nm-sized primary particles) were dry mixed with 43 parts aluminum phosphate hydrate (Fluka, AlPO₄.2H₂O). These proportions resulted in a final calcined, water-free, extrudate having 25% by weight zeolite. The well mixed powder was transferred to a high-shear mixer with 45 parts of an 8.5% aqueous hydroxyethyl cellulose (HEC) solution and kneaded for 20 minutes. The resulting paste was then piston extruded, dried at 25°C for 24 hours, heated to 550°C at 2°C/minute and maintained at that temperature for 3 hours. The shrinkage in diameter of the extrudate on calcination was 12.7%. After calcination, the binder was largely converted to the structure type of tridymite, as confirmed by the XRD of Fig. 1. The SEM of Fig. 2 shows a cut through a calcined extrudate and shows that the product is in the form of particles that are linked together with binder sinternecks (binder having a melted appearence between agglomerates) with a sponge-like open structure.

### Examples 2 to 5 and Comparative Example

Example 1 was repeated, but using the specified proportions of plasticizer and starting materials to give the specified final calcined proportions of binder and zeolite. For comparison purposes, Example 5 was repeated, but using boehmite instead of aluminum phosphate as binder. During calcination, boehmite undergoes a crystal phase transition into γ-alumina.The composition and shrinkage on calcination of the materials of examples 1 to 5 and of the Comparative Example are given in Table 1.

**Table 1**

| **Example** | **AlPO**_{**4**} | **ZSM-5** | **HEC** | **zeolite % in product** | **Shrinkage on Calcination, %** |
|---|---|---|---|---|---|
| 2 | 50.3 | 4.7 | 45 | 10 | 18.5 |
| 1 | 43 | 12 | 45 | 25 | 12.7 |
| 5 | 34.5 | 18.5 | 47 | 39 | 10.2 |
| 3 | 32.9 | 27.6 | 39.5 | 50 | 9.3 |
| 4 | 17.8 | 44.8 | 37.4 | 75 | 0 |
| **Example** | **Boehmite** | **ZSM-5** | **HEC** | **zeolite % in product** | **Shrinkage on Calcination, %** |
| Comparative | 38.2 | 19.1 | 42.7 | 39 | 0 |

The strength of the calcined extrudates was comparable to that of an alumina-bound extrudate of similar porportions.

B.E.T. analysis of the products of Examples 1 to 5 shows that the micropore system of the zeolite retains nitrogen accessability with some loss of surface area.

Mercury porosimetry data are as shown in Table 2.

**Table 2**

| **Example** | **Cumulative Pore Volume cm**^{**3**}**/g** | **Mean Pore Diameter, nm** | **Bulk Density cm**^{**3**}**/g** | **Porosity %** |
|---|---|---|---|---|
| 2 | 0.24 | 127 | 1.47 | 34.7 |
| 1 | 0.55 | 162 | 0.98 | 54.5 |
| 5 | 0.7 | 183 | n.a. | 61.5 |
| 3 | 0.59 | 113 | 0.92 | 55.1 |
| 4 | 0.55 | 100 | 0.94 | 51.4 |
| Comparative | n.a. | 10 | n.a. | 55.6 |

| | | | | |
|---|---|---|---|---|
| n.a. = not analyzed | | | | |

The pore size of the materials of examples 1 to 5 is monomodal, consisting of macropores with diameters between 100 and 200 nm.

### Catalytic activity

The products of Examples 1, 3 and 5 and of the Comparative Example were tested for catalytic activity in the MTO reaction. Ion exchange, found to be necessary for catalytic activity, was carried out by contact of 10ml of a 1.5M ammonium nitrate solution per gram of catalyst composition at 50 to 60°C for 1 hour. The product was washed 3 times with distilled water, dried for 12 hours at 120°C and calcined at 550°C. Ion exchange as well as subsequent drying and calcination were repeated twice.

Each ion-exchanged catalyst bed was preheated in a stainless steel tube reactor to a temperature of 380°C while purging with a nitrogen stream. Then a nitrogen-based feedstream containing 21% by volume methanol was passed through the catalyst bed at 1.65 bar, at different WHSV's and temperatures. The results were as shown in Table 3.

**Table 3**

| | **Product after ion exchange of Example No.** | | | | | | |
|---|---|---|---|---|---|---|---|
| | **1** | | **5** | | **3** | **Comparative** | |
| Temperature,°C | 320 | 400 | 320 | 400 | 320 | 320 | 400 |
| WHSV, h⁻¹ | 1.28 | 9.9 | 3.6 | 13.8 | 5.8 | 2.2 | 9.5 |
| Conversion, % | 60 | 60 | 60 | 60 | 60 | 60 | 60 |
| Selectivity to: | | | | | | | |
| Ethene + Propene, % | 57 | 40 | 46 | 36 | 40 | 40 | 32 |
| Methane, % | 0.7 | 1.2 | 0.5 | 1 | 0.5 | 1 | 13 |

In Table 3, WHSV is expressed as the total weight of methanol per hour per weight of catalyst, i.e. not only the weight of molecular sieve, but the total weight of catalyst including all other components, such as the binder. The results show that the aluminum phosphate-bound zeolite is non-selective to the unwanted methane product. The comparative alumina-bound catalyst showed significant selectivity to methane at the elevated reaction temperature of 400 °C.

## Claims

1. A process for the conversion of a feedstock to a hydrocarbon-containing product, which comprises contacting the feedstock under hydrocarbon-producing conditions with a catalyst composition comprising a crystalline molecular sieve and an aluminum phosphate-containing binder.

2. A process as claimed in claim 1, wherein the binder is at least partially in a form that has the structure type of tridymite.

3. A process as claimed in claim 1 or claim 2, wherein the feedstock is an oxygenate-containing feedstock.

4. A catalyst composition comprising a crystalline molecular sieve and an aluminum phosphate-containing binder in which the aluminum phosphate is at least partially in a form that has the structure type of tridymite.

5. A process for the manufacture of a catalyst composition, which comprises blending an amorphous solid aluminum phosphate with a crystalline molecular sieve and calcining the resulting blend.

6. A process as claimed in claim 5, wherein the calcination converts the aluminum phosphate at least partially to a form that has the structure type of tridymite.

7. A process as claimed in claim 5 or claim 6 wherein the amorphous aluminum phosphate has a molar Al:P ratio within the range of 1.5:1 to 1:1.5.

8. The use, in a process for the conversion of a feedstock to a hydrocarbon-containing product, of a catalyst composition comprising a crystalline molecular sieve and an aluminum phosphate-containing binder to enhance the olefinic hydrocarbon:saturated hydrocarbon ratio of the product.

9. A process for converting a feedstock to a hydrocarbon-containing product, using a catalyst as claimed in claim 4.

10. The use of the catalyst of claim 4 in a feedstock-to-hydrocarbon conversion process to enhance the olefinic hydrocarbon: saturated hydrocarbon ratio.
